# EUROPÄISCHE PATENTANMELDUNG

(11) **EP 2 767 515 A1**
(43) Veröffentlichungstag der Anmeldung: **20.08.2014**
(21) Anmeldenummer: 13000736.2
(22) Anmeldetag: 13.02.2013
(51) Int. Cl.: C02F 3/12, B01D 21/00, C02F 3/22

(54) **Kläranlage mit einer Trennwand**

(71) Anmelder: KLARO GmbH, 95447 Bayreuth (DE)
(72) Erfinder: Graf, Otto P., 79104 Freiburg (DE)
(74) Vertreter: Spranger, Stephan

(57) **Zusammenfassung**

Ein erster Aspekt der Erfindung betrifft eine Kläranlage (1) mit einer Trennwand (4), wobei die Kläranlage (1) ein Vorklärbecken (2) und ein Reaktorbecken (3) aufweist, und wobei die Trennwand (4) das Vorklärbecken (2) von dem Reaktorbecken (3) abteilt. Das Vorklärbecken (2) steht mit dem Reaktorbecken (3) strömungstechnisch in Wirkverbindung. Die Trennwand (4) weist in einem Belebtschlamm- und Feststoffbereich (5) der Kläranlage (1) mindestens eine Öffnung (6) auf, welche die strömungstechnische Wirkverbindung zwischen dem in ein Gehäuse (7) der Kläranlage (1) integrierten Vorklärbecken (2) und dem Reaktorbecken (3) bildet.

## Beschreibung

Die Erfindung betrifft eine Kläranlage mit einer Trennwand gemäß dem Oberbegriff des Anspruchs 1 und eine Trennwand einer Kläranlage gemäß dem Oberbegriff des Anspruchs 7.

Eine Kleinkläranlage mit wenigstens einem Vorklärbecken und einer biologischen Reinigungsstufe in einem zweiten Becken, die über zumindest eine Abwasserleitung strömungstechnisch in Wirkverbindung stehen, ist aus der Druckschrift DE 199 61 195 A1 bekannt. Die Trennwand bildet bei der bekannten Kleinkläranlage das Erdreich sowie Wandungen der Klärbecken. Ein Nachteil derartiger Kläranlagen ist der relativ große Raumbedarf für eine Kleinkläranlage, zumal die bekannte Kleinkläranlage gemäß DE 199 61 195 A1 ein drittes Klärbecken als Nachklärbecken aufweist, das mit dem zweiten Becken mit biologischer Reinigungsstufe strömungstechnisch in Wirkverbindung steht und eine Schlammsammeleinrichtung aufweist. Eine weitere strömungstechnische Wirkverbindung besteht zwischen dem Nachklärbecken und dem Vorklärbecken in Form einer Rückführung des Klärschlammes aus dem Nachklärbecken zurück in das Vorklärbecken mittels einer Verbindungsleitung und einer Drucklufthebeleitung, um den sich absetzenden Klärschlamm im Nachklärbecken über die Verbindungsleitung zurück in das Vorklärbecken zu heben. Ein Nachteil dieses bekannten Dreikammer-Klärsystem ist der Kosten- und Montageaufwand an Wirkverbindungen über Leitungsrohre, sowie das Erfordernis einer Schlammhebevorrichtung und der extrem hohe Raumbedarf.

Eine weitere Kläranlage mit einer Trennwand zwischen einem Vorklärbecken und einem Reaktorbecken in einem gemeinsamen Gehäuse ist aus der Druckschrift DE 20 2012 004 597 bekannt und wird als Belebungsanlage im Aufstaubetrieb, die auch als SBR (Sequency Batch Reactor) bezeichnet wird, betrieben. Diese Anlage kann chargenweise oder kontinuierlich Abwasser aus dem Vorklärbecken in das Reaktorbecken mittels einer strömungstechnischen Wirkverbindung leiten, indem in dem Vorklärbecken eine Druckluft steuerbare Siphonverbindung über eine Durchlassöffnung in der Trennwand vorgesehen ist, und wobei bei einem kontinuierlichen oder chargenweisen Zulauf von Abwasser der Wasserspiegel in dem Reaktorbecken ansteigt. Während oder nach der Abwasserzuführung laufen im Reaktorbecken nacheinander eine Belüftungsphase, eine Absetzphase und schließlich eine Wasserabzugsphase mittels einer chargenweise aktivierten Wasserhebevorrichtung ab, wobei weiter Abwasser in das Reaktorbecken chargenweise oder kontinuierlich abhängig von der Druckluft steuerbaren Siphonverbindung zulaufen kann. In einer derartigen Kläranlage setzen sich im Laufe der Zeit nachteilig unterhalb einer Ansaugöffnung der Siphonverbindung in dem Vorklärbecken unbelebte Feststoffe ab, die dem Reaktorbecken nicht zugeführt werden können.

Schließlich sind auch Kläranlagen bekannt, die ein externes Vorklärbecken aufweisen, das über eine strömungstechnische Wirkverbindung wie einer Überlaufleitung mit einem Reaktorbecken strömungstechnisch in Wirkverbindung steht, wobei das Reaktorbecken eine eingehängte Tauchwand als Höhenwandteil in einem oberen Bereich der Kläranlage aufweist, wobei eine Unterkante des Höhenwandteils in einen Klärschlammbereich des Reaktorbeckens hineinragt. Dabei ist das Höhenwandteil geeignet, einen Zustrom von vorgeklärtem Abwasser aus dem externen Vorklärbecken in das Reaktorbecken zu beruhigen. Ein Nachteil derartiger Kläranlagen ist es, dass ein externes Vorklärbecken erforderlich ist.

Es ist daher die Aufgabe der vorliegenden Erfindung, eine verbesserte Kläranlage mit einer Trennwand und eine verbesserte strömungstechnische Wirkverbindung zwischen einem Vorklärbecken und einem Reaktorbecken durch eine geeignete Trennwand einer Kläranlage bereit zu stellen, welche die oben genannten Nachteile überwindet und mittels konstruktiver Maßnahmen eine kompakte SBR-Kläranlage mit Vorklärbecken und Reaktorbecken in einem gemeinsamen Gehäuse ermöglicht.

Diese und andere Aufgaben der vorliegenden Erfindung werden mit den Merkmalen des Gegenstandes der Ansprüche 1 und 7 gelöst.

Bevorzugte Ausgestaltungen und Weiterbildungen sind in den abhängigen Ansprüchen dargelegt.

Gemäß einem ersten Aspekt der Erfindung ist eine Kläranlage mit einer Trennwand ausgestattet, wobei die Kläranlage ein Vorklärbecken und ein Reaktorbecken aufweist und die Trennwand das Vorklärbecken von dem Reaktorbecken abteilt. Das Vorklärbecken steht mit dem Reaktorbecken strömungstechnisch in Wirkverbindung. Die Trennwand weist in einem Belebtschlamm- und Feststoffbereich der Kläranlage mindestens eine Öffnung auf, welche die strömungstechnische Wirkverbindung zwischen dem in ein Gehäuse der Kläranlage integrierten Vorklärbecken und dem Reaktorbecken bildet. Das Reaktorbecken ist dabei als Belebungsbecken bzw. -kammer ausgeführt. Das Vorklärbecken ist zweckmäßiger Weise belüftet.

Die erfindungsgemäße Kläranlage mit integriertem Vorklärbecken kann aufgrund der Konstruktion der erfindungsgemäßen Trennwand ungeklärtes Abwasser mit Grobpartikeln ohne externe Vorklärung direkt verarbeiten. Ein weiterer Vorteil ist ihre Kompaktheit, da das integrierte Vorklärbecken und das Reaktorbecken in einem Gehäuse gemeinsam angeordnet sind. Aufgrund der Konstruktion der erfindungsgemäßen Trennwand kann jedoch bei der erfindungsgemäßen Kläranlage auf einen aufwändige Druckluftheber in einem Nachklärbecken oder auf andere Mittel wie steuerbare Siphonvorrichtungen und auf Zuleitungen zur Herstellung und Aufrechterhaltung von strömungstechnischen Wirkverbindungen zwischen dem Vorklärbecken und dem Reaktorbecken verzichtet werden bzw. können die Kosten für derartige Komponenten vollständig eingespart werden. Des Weiteren ermöglicht die mindestens eine Öffnung, welche die strömungstechnische Wirkverbindung zwischen dem in dem Gehäuse der Kläranlage integrierten Vorklärbecken und dem Reaktorbecken bildet, die sonst räumlich getrennten Funktionen beispielsweise eines Dreikammer-Klärsystems mit Vorklärbecken, Reaktorbecken und eines Nachklärbecken über die in der Trennwand befindliche großflächige Öffnung zu erfüllen. Somit kann auch auf Rückführungsleitungen, Fördermittel wie Drucklufthebevorrichtungen oder Pumpen weitestgehend verzichtet werden, um Wirkverbindungen zwischen den drei Funktionen, nämlich der Vorklärung, der Belebtschlammbearbeitung und der Nachklärung mit Schlammrückführung zum Vorklärbecken sicherzustellen.

Erfindungsgemäß kann somit ein separates zusätzliches anaerobes Vorklärbecken, wie es gemäß dem Stand der Technik vorgesehen ist, entfallen

In einer weiteren Ausführungsform der Erfindung ist die Öffnung in der Trennwand durch Seitenwandsegmente auf eine Breite b und mindestens einem Höhenwandsegment auf eine Höhe h begrenzt. Trotz dieser Begrenzung ergibt sich eine Öffnung, die einen ständigen Austausch im Bodenbereich der Kläranlage zwischen wässriger Flüssigkeit, Schwebstoffen, Belebtschlamm und und unbelebtem Klärschlamm ermöglicht, da die durch eine Breite b und eine Höhe h begrenzte Öffnung großflächig genug ist, um einen ständigen Austausch im Bodenbereich der Kläranlage zwischen den schlammartigen zu klärenden Flüssigkeiten sicherzustellen.

Dazu weist bei einer weiteren Ausführungsform der Erfindung das mindestens eine Höhenwandsegment eine Unterkante auf, welche die Oberkante der Öffnung in der Trennwand bildet, und wobei die Unterkante des mindestens einen Höhenwandsegmentes unterhalb eines Niveaus einer Ansaugöffnung einer Wasserhebevorrichtung in dem Reaktorbecken angeordnet ist. Eine derartige Wasserhebevorrichtung in dem Reaktorbecken ist erforderlich, um das geklärte Wasser, das auch Klarwasser genannt wird, oberhalb einer Grenzschicht eines Bereich mit sich absetzendem Belebtschlamm und Feststoffen nach einer Sedimentations- oder Absetzphase aus dem Reaktorbecken herauszuheben. Die Unterkante des Höhenwandsegmentes ist deshalb unterhalb der Ansaugöffnung der Wasserhebevorrichtung, die oberhalb der Grenzschicht angeordnet ist, während die Unterkante in Höhe der Grenzschicht oder geringfügig unterhalb derselben des sich absetzenden Belebtschlamm- und Feststoffbereichs angeordnet ist.

Um dennoch einen intensiven Austausch über die Öffnung in der Trennwand zwischen einer Vorklärklärfunktion, einer Belebtschlammbehandlung und einer Nachklärfunktion und die dazu erforderliche strömungstechnische Wirkverbindung über die Öffnung in der Trennwand zu gewährleisten, ist in einer weiteren Ausführungsform der Erfindung in einem Bodenbereich der Öffnung eine Belüftungseinheit angeordnet. Diese Belüftungseinheit sorgt in der Belüftungsphase für eine intensive Durchmischung des Schlammes und der Flüssigkeiten und unterstützt damit die strömungstechnische Wirkverbindung zwischen dem Vorklärbecken und dem Reaktorbecken, sodass auf ein Nachklärbecken vollständig verzichtet werden kann. Die Aufgabe des Nachklärbeckens und die Rückführung des in einem Nachklärbecken sich absetzenden Klärschlammes werden durch eine weitere Belüftungseinheit in dem Reaktorbecken nachhaltig erfüllt.

Um die Trennwand mit ihren Seitenwandsegmenten und dem Höhenwandsegment in einer Position zu fixieren, die das Gehäuse in ein Vorklärbecken und ein Reaktorbecken aufteilt, ist es vorgesehen, dass innere Seitenwände des Gehäuses der Kläranlage Widerlager zur Aufnahme und Fixierung der Seitenwandsegmente der Trennwand aufweisen. Derartige Widerlager können mit Winkelelementen an den Seitenwandsegmenten und mit Versteifungsprofilen der Trennwand zusammenwirken.

Darüber hinaus ist es möglich, in den inneren Seitenwänden des Gehäuses Nuten vorzusehen, die zur Aufnahme und Fixierung der Seitenwandsegmente der Trennwand geeignet sind. Das Einbringen der Trennwand und das Fixieren in den Nuten der inneren Seitenwände des Gehäuses kann dadurch erleichtert werden, dass die Trennwand klappbar oder faltbar ausgeführt wird und zum Einbringen in die Nuten entsprechend aufgeklappt bzw. auseinandergefaltet wird.

Gemäß einem weiteren Aspekt der Erfindung trennt eine Trennwand einer Kläranlage ein Vorklärbecken von einem Reaktorbecken. Dazu weist die Trennwand ein Höhenwandteil auf, das in einem oberen Bereich der Kläranlage angeordnet ist und eine Unterkante besitzt, die in einen Klärschlammbereich eines Reaktorbeckens hineinragt. Das Höhenwandteil ist geeignet, einen Zustrom von vorgeklärtem Abwasser von Betriebsphasen innerhalb des Reaktorbeckens zu trennen. Die Trennwand weist zusätzlich ein erstes Seitenwandsegment und ein zweites Seitenwandsegment auf, die sich bis zu einem Boden der Kläranlage erstrecken. Ein Höhenwandsegment ist zwischen den Seitenwandsegmenten derart angeordnet, dass die Trennwand ein in die Kläranlage integriertes Vorklärbecken bildet, das von einem Reaktorbecken durch die Trennwand abgeteilt ist.

Das durch die Trennwand gebildete integrierte Vorklärbecken hat den Vorteil, dass ungeklärtes Wasser mit schwimmenden Großpartikeln direkt in die Kläranlage eingeleitet werden kann und auf ein externes Vorklärbecken für diese Kläranlage verzichtet werden kann. Durch das Höhenwandsegment wird verhindert, dass schwimmende Großpartikel beim Einlaufen des zu klärenden Wassers in das Vorklärbecken direkt zu dem Reaktorbecken unvorbehandelt schwimmen können. Derartige schwimmende Großfraktionen werden zunächst durch das Höhenwandsegment und die oberen Bereiche der Seitenwandsegmente zurückgehalten und können einer Vorbehandlung bzw. Vorklärung in dem Vorklärbecken unterzogen werden. Im Unterschied zu herkömmlichen Vorklärbecken mit lediglich einer mechanischen Trennung z.B. in Form von fest eingebauten durchgängigen Trennwänden kann erfindungsgemäß aufgrund der großflächigen Öffnung im unteren Bereich der Trennwand und dem Vorsehen einer Belüftungseinheit kann in dem integrierten Vorklärbecken zusätzlich eine aerobe Behandlung der Großfraktionen erfolgen. Dieses wird durch die strömungstechnische Wirkverbindung zwischen dem Vorklärbecken und dem Reaktorbecken über die Öffnung in der Trennwand und die zusätzliche Belüftung des Klärwassers im Bereich eines Übergangs zwischen Vorklärbecken und Reaktorbecken erwirkt.

Dazu ist es vorgesehen, dass die Seitenwandsegmente und das Höhenwandsegment eine Öffnung in der Trennwand freigeben, wobei die Öffnung in der Trennwand eine strömungstechnische Wirkverbindung zwischen dem in die Kläranlage integrierten Vorklärbecken und dem durch die Trennwand räumlich begrenzten Reaktorbecken ausbildet. Dazu ist die Trennwand in dem Gehäuse der Kläranlage derart angeordnet, dass etwa ein Drittel des Fassungsvolumens für den Vorklärbereich und zwei Drittel des Fassungsvolumens für den Reaktorbereich zur Verfügung stehen und die Öffnung etwa ein Sechstel bis ein Drittel der Fläche der Trennwand aufweist.

Weiterhin ist es vorgesehen, dass die Seitenwandsegmente der Trennwand im Bereich der Öffnung Führungsschienen aufweisen, die geeignet sind, einen Schlammrechen und/oder ein Schlammgitter aufzunehmen. Die Maschengröße eines Schlammgitters liegt dabei bei etwa 25x100 mm, wobei die 25 mm horizontal und die 100 mm vertikal ausgeführt sein können.

In einer weiteren Ausführungsform der Erfindung sind die Seitenwandsegmente mit dem Höhenwandsegment über Scharnierelernente mechanisch verbunden, wobei die Seitenwandsegmente mit dem Höhenwandsegment in einem zusammengeklappten Zustand über eine zentrale obere Öffnung des Gehäuses der Kläranlage in die Kläranlage einführbar und in einem aufgeklappten Zustand zur Ausbildung des integrierten Vorklärbeckens in dem Gehäuse montierbar sind.

Weitere Aufgaben, Vorteile, Merkmale und Ausgestaltungen der vorliegenden Erfindung werden aus der folgenden detaillierten Beschreibung bevorzugter Ausführungsformen mit Bezug auf die Zeichnungen ersichtlich.
- Fig. 1: zeigt eine Prinzipskizze einer Kläranlange mit schematischem Querschnitt einer Trennwand gemäß einer ersten Ausführungsform der Erfindung;
- Fig. 2: zeigt eine schematische Draufsicht auf die Kläranlage gemäß Figur 1;
- Fig. 3: zeigt einen schematischen Querschnitt durch die Kläranlage gemäß Figur 1 mit einer schematischen Ansicht der Trennwand;
- Fig. 4: zeigt einen schematischen Querschnitt durch eine Kläranlage gemäß einer weiteren Ausführungsform mit Belüftungseinheit;
- Fig. 5: zeigt einen schematischen Querschnitt durch eine Kläranlage gemäß einer anderen Ausführungsform mit einem Schlammgitter;
- Fig. 6: zeigt eine schematische Ansicht einer Trennwand mit mittig angeordneten Scharnierelementen;
- Fig. 7: zeigt mit den Figuren 7a, 7b, 7c und 7d Ansichten einer modifizierten Trennwand mit Scharnierelernenten;
- Fig. 8: zeigt mit den Figuren 8a, 8b, 8c und 8d Ansichten einer weiteren modifizierten Trennwand mit Scharnierelementen;
- Fig. 9: zeigt mit den Figuren 9a, 9b, 9c und 9d Ansichten einer anderen modifizierten Trennwand mit Scharnierelementen.

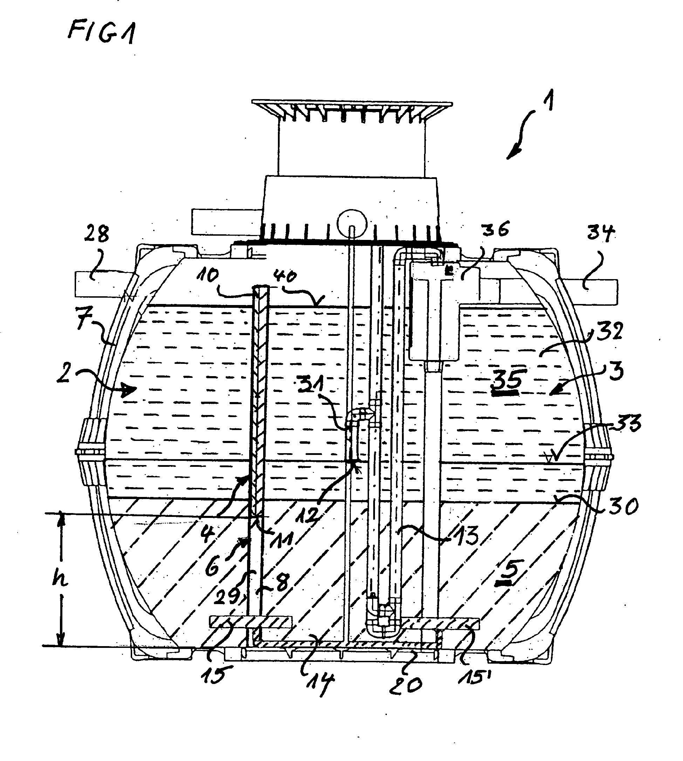

Figur 1 zeigt eine Prinzipskizze einer Kläranlange 1 mit einem schematischem Querschnitt einer Trennwand 4 gemäß einer ersten Ausführungsform der Erfindung. Die Kläranlage 1 wird durch die Trennwand 4 in einem Gehäuse 7 in zwei Becken oder Kammern unterteilt, wobei ein erstes Becken die Funktion einer belüfteten Grobstoffkammer im Sinn eines belüfteten, integrierten Vorklärbeckens 2 übernimmt und ein zur Trennwand 4 benachbartes Becken die Funktionen eines Reaktorbeckens 3 aufweist.. Das Reaktorbecken 3 ist dabei als Belebungsbecken bzw. -kammer ausgeführt. Das Vorklärbecken 2 ist belüftet.

Das Vorklärbecken 2 steht mit einem Abwasserzuflussrohr 28 in Verbindung, über das Grob- und Schwimmstofffraktionen mit dem Abwasser in das Vorklärbecken 2 gelangen. Das Vorklärbecken 2 dient dem Rückhalt der groben und schwimmfähigen Schmutzstofffraktionen des rohen Abwassers, das über das Abwasserzuflussrohr 28 zuströmt. Die Trennwand 4 weist dazu ein Höhenwandsegment 10 auf, das in Figur 1 quer geschnitten ist und eine Unterkante 11 aufweist. Außerdem ist von der Trennwand 4 in Figur 1 ein Seitenwandsegment 8 mit einer Seitenwandkante 29 zu sehen, die einer Öffnung 6 in der Trennwand 4 zugewandt ist, wobei die Breite der Öffnung 6 durch die Seitenwandkante 29 begrenzt ist, während die Höhe h der Öffnung 6 durch die Unterkante 11 des Höhenwandsegmentes 10 bestimmt wird.

Die Kläranlage 1 ist in der gezeigten Absetzphase von Feststoffen und Belebtschlamm bis zu einem Füllstandsniveau 40, wie es Figur 1 zeigt, aufgefüllt, wobei sich in dieser gezeigten sogenannten Sedimentations- oder Absetzphase ein Grenzschichtniveau 30 zwischen einem Belebtschlamm- und Feststoffbereich 5 und einem Klarwasserbereich 35 mindestens in dem Reaktorbecken 3 ausbildet. Um das Klarwasser aus dem Reaktorbecken abzuziehen, ist in dem Reaktorbecken 3 eine Wasserhebevorrichtung 13 angeordnet, die mit Druckluft betrieben wird und eine Ansaugöffnung 12 eines Ansaugstutzens 31 aufweist, über die das Wasser aus dem Reaktorbecken bei einem Wasserstandsniveau 33 abgezogen werden kann.

Die Unterkante 11 des Höhenwandsegmentes 10, welche gleichzeitig die Oberkante der Öffnung 6 bildet, ist unterhalb dieses Wasserstandsniveaus 33 der Ansaugöffnung 12 angeordnet und kann geringfügig bis in den Belebtschlamm- und Feststoffbereich 5 hineinragen. Dadurch verhindert das Höhenwandsegment 10 der Trennwand 4, dass beim Zulauf von ungeklärtem Abwasser grobe und schwimmfähige Schmutzstofffraktionen in der gesamten Kläranlage verteilt werden. Auch werden Zulaufstöße, wie sie bei Abwasserzuführungen auftreten können, durch das Höhenwandteil gepuffert. Über die Öffnung 6 der Trennwand 4 im Belebtschlamm- und Feststoffbereich 5 steht das Vorklärbecken 2 mit dem Reaktorbecken 3 in Wirkverbindung. In einem unteren Bereich der Öffnung 6 ist eine Belüftungseinheit 15 in einem Bodenbereich 14 über einem Boden 20 der Kläranlage 1 angeordnet, wobei die Belüftungseinheit 15 auch in das Vorklärbecken 2 hineinragt.

Wenn in der Belüftungsphase die Belüftung der Anlage aktiv ist, werden somit nicht nur der Belebtschlamm im Reaktorbecken 3 über eine Belüftungseinheit 15' sondern auch über die Belüftungseinheit 15, die in das Vorklärbecken 2 hineinragt, die Grob- und Schwimmstofffraktionen im integrierten Vorklärbecken 2 mit belüftet. Damit werden die aeroben Bakterien, die in dem zuströmenden Abwasser enthalten sind, sowohl in dem Vorklärbecken 2 als auch in dem Reaktorbecken 3 aktiviert, während anaerobe Bakterien, welche die Ursache für Fäkaliengerüche sind, in Folge des Sauerstoffeintrags sowohl in dem Vorklärbecken 2 als auch in dem Reaktorbecken 3 deaktiviert bzw. abgetötet werden. Somit werden in vorteilhafter Weise die Grob- und Schwimmstoffe, die nach dem Zulauf in das Vorklärbecken 2 aufschwimmen, mit einer ersten Aktivierungsstufe intensiv in dem Vorklärbecken 2 abgebaut, während anaerobe Faulprozesse rechtzeitig gezielt unterbunden werden. Das in die Kläranlage 1 integrierte Vorklärbecken 2 dient somit nicht nur einer mechanischen Trennung von Schmutzstofffraktionen, wie es in herkömmlichen externen Vorklärbecken vorgesehen ist, sondern ermöglicht zusätzlich eine Sauerstoffbehandlung der groben und schwimmfähigen Schmutzstofffraktionen im rohen Abwasser.

Im Anschluss an diese Grob- und Schwimmstoffbehandlung in dem integrierten Vorklärbecken 2 der Kläranlage 1 werden durch die strömungstechnische Wirkverbindung der Öffnung 6 die vorgeklärten Abwässer unmittelbar in das Reaktorbecken 3 eingeleitet. Somit besteht bei dieser Kläranlage 1 eine direkte Verbindung zwischen dem sonst rein mechanischen Vorklärbecken und der biologischen Behandlungskammer. Es entsteht somit im unteren Bereich der Kläranlage 1 eine sogenannte mikrobielle Mischbiozönose. Durch die zweite Belüftungseinheit 15' in dem Reaktorbecken wird ausreichend Luft für eine weitere zweite Aktivierungsstufe der Abwasserbehandlung eingeblasen. Dieses Reaktorbecken 3 übernimmt zusätzlich die Funktion einer Nachklärkammer eines Dreikammer-Klärsystems, wie es aus der oben zitierten Druckschrift bekannt ist, da über die Öffnung 6 in der Trennwand 4 ein ständiger Austausch in der Belüftungsphase in dem Belebtschlamm- und Feststoffbereich 5 der Kläranlage 1 über die Öffnung 6 als strömungstechnische Wirkverbindung erfolgt.

Nach der in Figur 1 gezeigten Sedimentations- oder Absetzphase kann im Reaktorbecken 3 mit Hilfe der Wasserhebevorrichtung 13 das geklärte Wasser 32 in einen Vorfluter 36 gehoben werden, über den das geklärte Wasser zu einem Auslass 34 geleitet wird, der wiederum mit Sickergruben oder Desinfektionsstufen oder Brauchwasseranlagen strömungstechnisch in Wirkverbindung stehen kann. Der Vorfluter 36 wird derart mit Hilfe der Wasserhebevorrichtung 13 befüllt, dass aus dem Vorfluter 36 Klarwasserproben für Untersuchungen entnommen werden können.

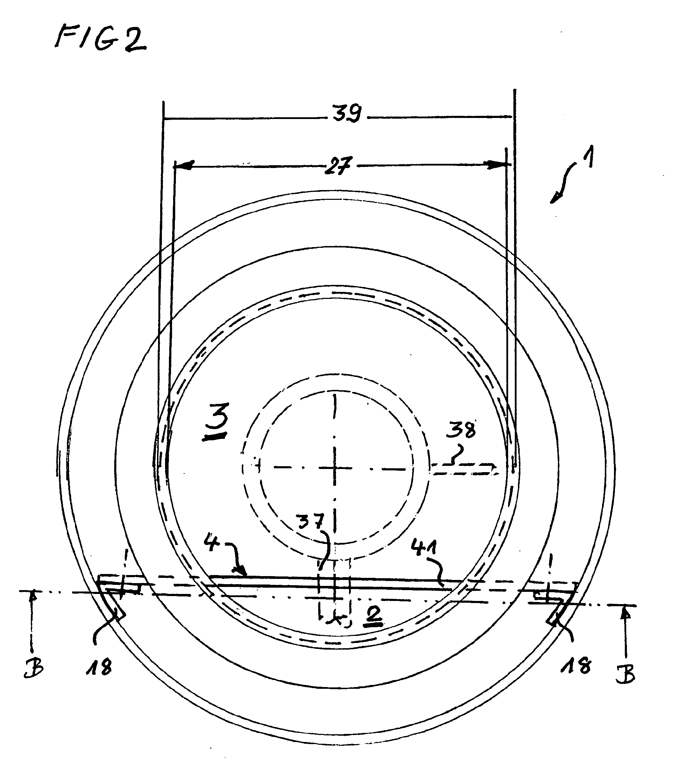

Figur 2 zeigt eine schematische Draufsicht auf die Kläranlage 1 gemäß Figur 1. Komponenten mit den gleichen Funktionen wie in Figur 1 werden in den nachfolgenden Figuren mit gleichen Bezugszeichen gekennzeichnet und nicht extra erörtert.

Eine zentrale Öffnung 27 auf der Oberseite der Kläranlage 1 ist von einem Deckel 39 geschlossen, wobei das entstehende Abgas über einen Abgasauslass 37 abgeführt wird, während über eine Druckluftzufuhr 38 im Deckel 39 Druckluft beispielsweise für die Belüftungsphase in die Kläranlage 1 eingeführt werden kann. Bei Abnahme des Deckels 39 von der Kläranlage 1 wird eine Oberkante 41 der Trennwand 4 sichtbar. Die Position der Trennwand 4 ist außermittig, sodass sich für den Bereich des Vorklärbeckens 2 ein kleineres Volumen ergibt als für das Reaktorbecken 3. In der in Figur 2 gezeigten Ausführungsform ist etwa ein Drittel des Volumens der Kläranlage 1 für das Vorklärbecken 2 und zwei Drittel des Volumens der Kläranlage 1 für das Reaktorbecken 3 vorgesehen. Die in Figur 2 sichtbare Oberkante 41 einer aus zwei aufeinander angeordneten Platten bestehenden Trennwand 4 kann durch entsprechende Profilleisten verstärkt und zusammengehalten werden.

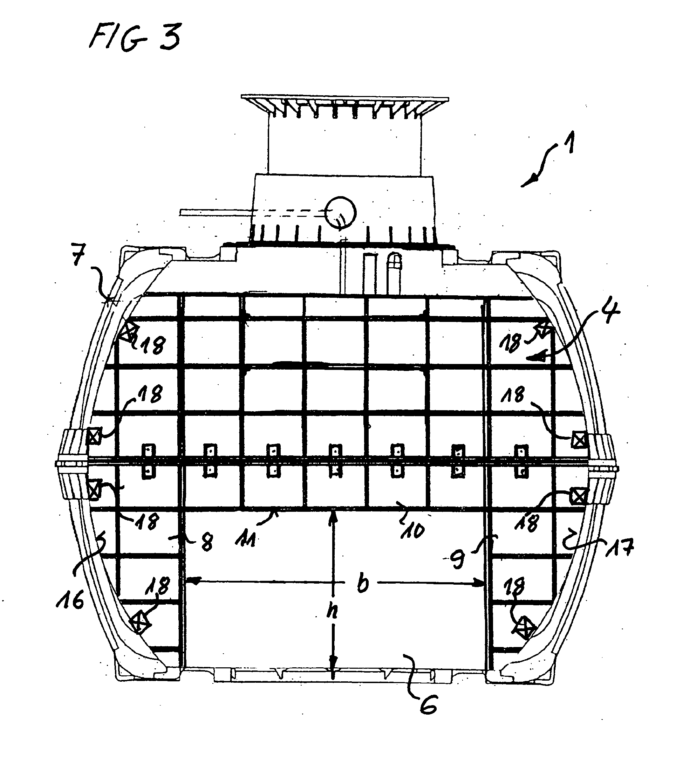

Figur 3 zeigt einen schematischen Querschnitt durch die Kläranlage 1 gemäß Figur 2 entlang der Schnittebene B-B mit einer schematischen Draufsicht auf die Trennwand 4. Die Trennwand 4 weist drei Segmente auf, nämlich ein erstes Seitenwandsegment 8, ein zweites Seitenwandsegment 9, die praktisch die Breite b der Öffnung 6 in der Trennwand 4 beschränken, wobei ein drittes Wandsegment in Form eines Höhenwandsegmentes 10 mit einer Unterkante 11 die Höhe h der Öffnung 6 bestimmt. Die Seitenwandsegmente 8 und 9 sind an ihren Außenkanten der Kontur einer linken Seitenwand 16 und einer rechten Seitenwand 17 der Kläranlage 1 angepasst und können über Widerlager 18 mit der Trennwand 4 mit den Seitenwänden 16 bzw. 17 der Kläranlage 1 verbunden sein.

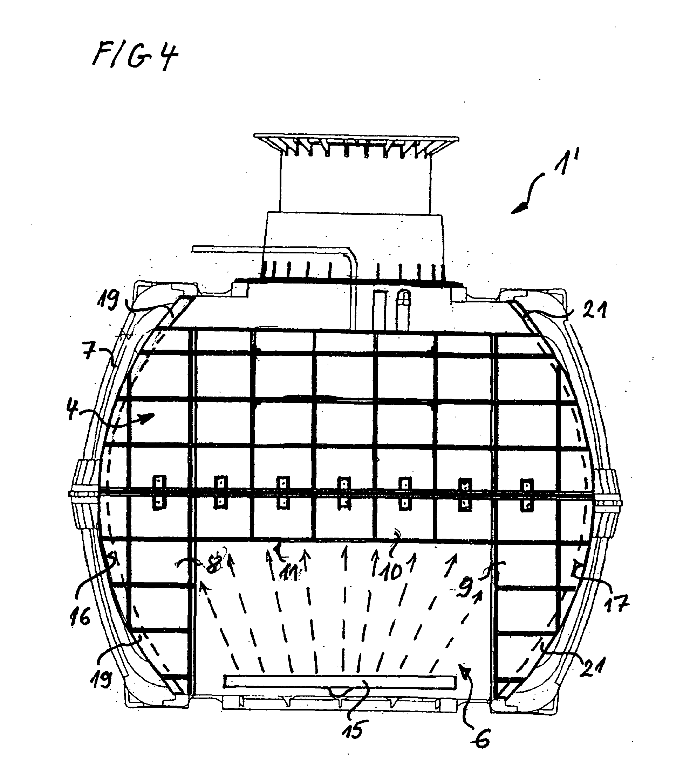

Figur 4 zeigt einen schematischen Querschnitt durch eine Kläranlage 1' gemäß einer weiteren Ausführungsform der Erfindung mit einer Belüftungseinheit 15, die in der Öffnung 6 der Trennwand 4 angeordnet ist. Die Funktion dieser Belüftungseinheit 15 wurde bereits oben im Detail erörtert, sodass sich an dieser Stelle eine Wiederholung erübrigt. Die Belüftungseinheit 15 in der Öffnung 6 ragt somit teilweise in das Vorklärbecken und teilweise in das Reaktorbecken der Kläranlage 1' hinein. Diese weitere Ausführungsform der Kläranlage 1' unterscheidet sich von der vorhergehenden Ausführungsform dadurch, dass zur Fixierung der Trennwand 4 an den inneren Seitenwänden 16 und 17 der Kläranlage 1' keine Widerlager angeordnet sind, sondern die inneren Seitenwände 16 und 17 der Kläranlage 1' Nuten 19 und 21, die in Figur 4 mit gestrichelten Linien markiert sind, aufweisen, in welche die Seitenwandteile 8 und 9 der Trennwand 4 eingeführt sind.

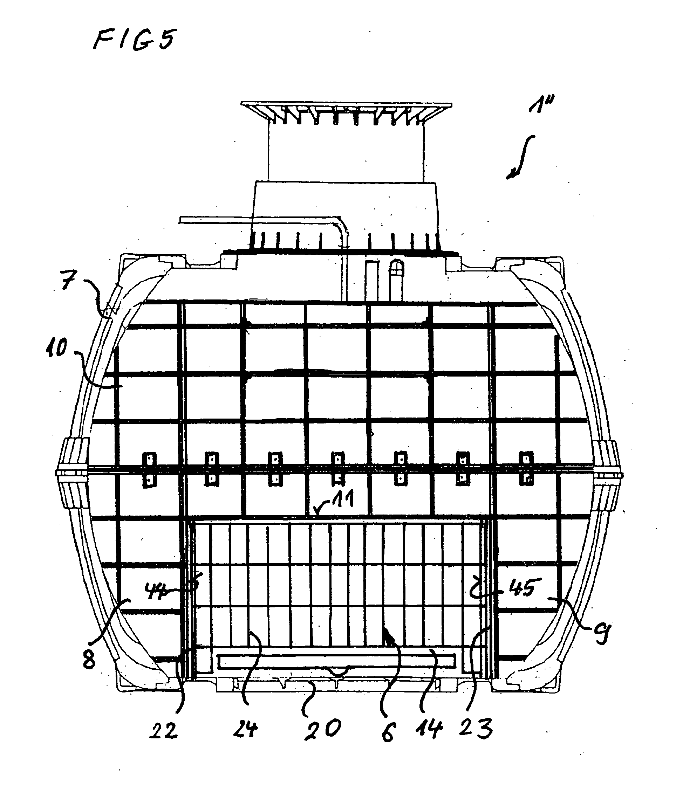

Figur 5 zeigt einen schematischen Querschnitt durch eine Kläranlage 1" gemäß einer anderen Ausführungsform der Erfindung mit einem Schlammgitter 24, das in Führungsschienen 22 bzw. 23 eingeführt ist, aber auch jederzeit wieder abgezogen werden kann. Die Führungsschiene 22 ist an der Innenkante 44 des Seitenwandsegmentes 8 und die Führungsschiene 23 ist an der Innenkante 45 des Seitenwandsegmentes 9 angeordnet, wobei das Schlammgitter 24 den Bodenbereich 14 mit der Belüftungseinheit 15 über dem Boden 20 der Kläranlage 1" in der Öffnung 6 freilässt. Ein derartiges Schlammgitter 24 ist lediglich für das Anfahren der Kläranlage 1" nach dem Aufbau oder einer Wartung hilfreich, damit Schmutzstofffraktionen, die über einlaufende ungeklärte Abwässer schwimmend in die Kläranlage erstmalig eingespült werden, durch das Schlammgitter 24 davon abgehalten werden in das Reaktorbecken zu schwimmen.

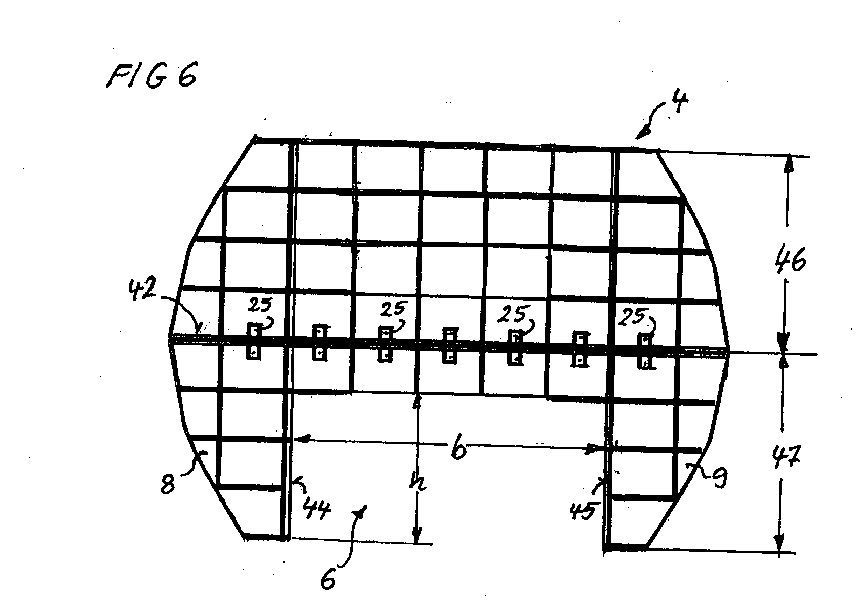

Figur 6 zeigt eine schematische Ansicht einer Trennwand 4, die in einer horizontalen Mitte angeordnete Scharnierelemente 25 aufweist. Zwischen Seitenwandsegmenten 8 und 9 ist das Höhenwandsegment 10 angeordnet, das bei dieser Ausführungsform der Erfindung die Höhe h einer Öffnung 6 einer strömungstechnischen Wirkverbindung begrenzt, während das erste und zweite Seitenwandsegment 8 und 9 mit ihren Innenkanten 44 und 45 die Breite b der Öffnung 6 begrenzen.

Die Öffnung 6 bildet, wie bereits oben mehrfach ausgeführt, eine strömungstechnische Wirkverbindung zwischen dem integrierten Vorklärbecken und dem Reaktorbecken einer Kläranlage. Die Scharnierelemente 25, die für eine horizontale Schwenkachse 42 mittig in der Trennwand 4 angeordnet sind, können in vorteilhafter Weise dazu eingesetzt werden, dass ein oberer Bereich 46 der Trennwand 4 mit einem unteren Bereich 47 der Trennwand 4 übereinander geklappt werden können, sodass in dem zusammengeklappten Zustand die Trennwand 4 in das Gehäuse der Kläranlage über die in Figur 2 gezeigte zentrale Öffnung 27 eingeführt werden kann. Nach der Einführung der Trennwand 4 im zusammengeklappten Zustand über die zentrale Öffnung 27, wie sie in Figur 2 gezeigt wird, muss die Trennwand jedoch nochmals um 90° gedreht werden, bevor sie aufgeklappt werden kann.

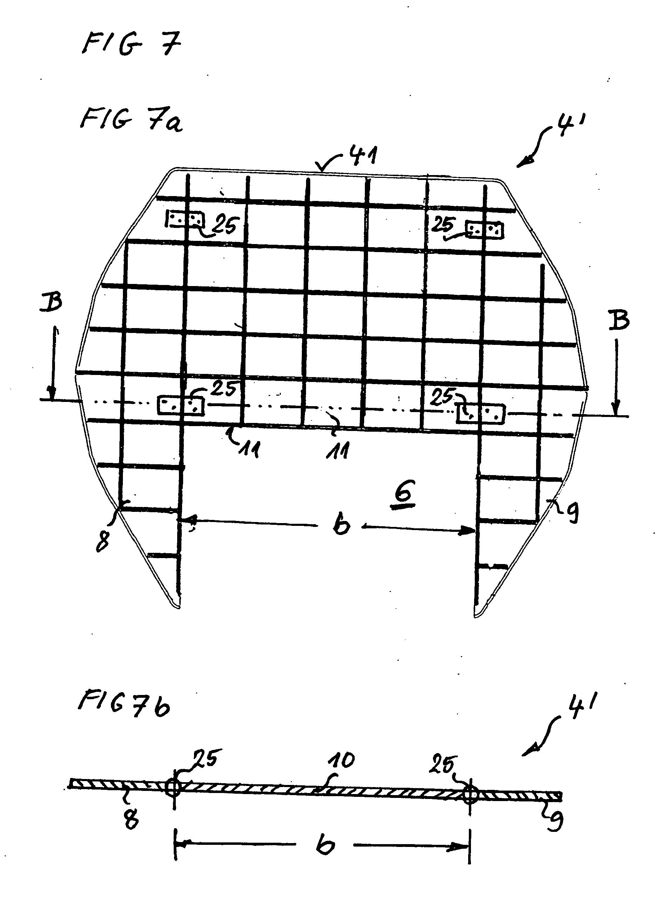

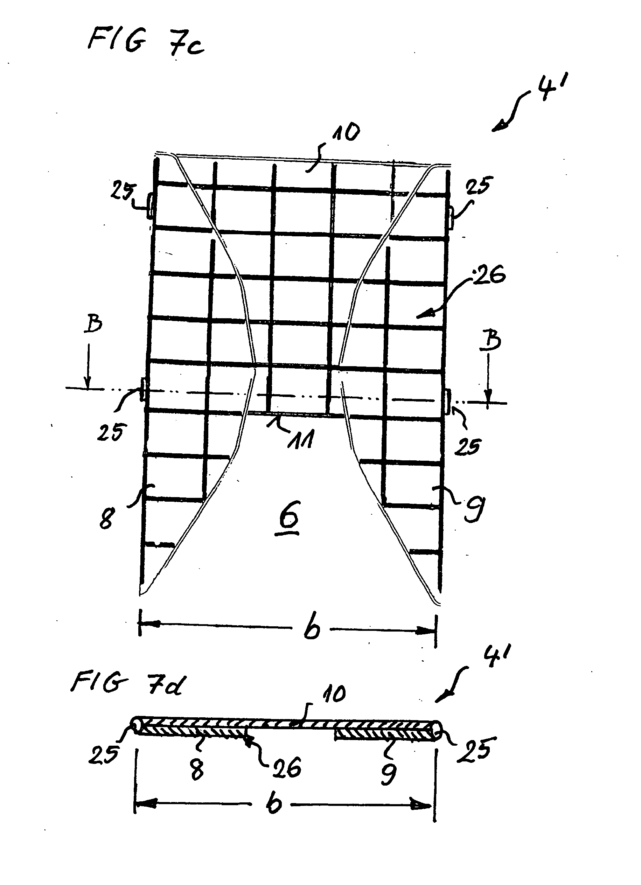

Figur 7 zeigt mit den Figuren 7a, 7b, 7c und 7d Ansichten einer modifizierten Trennwand 4' mit Schamierelementen 25. In dieser modifizierten Ausführungsform sind die Scharnierelemente 25 vertikal übereinander angeordnet und verbinden zu beiden Seiten des Höhenwandsegmentes 10 die Seitenwandsegmente 8 und 9 mit dem Höhenwandsegment 10 in der Weise, dass die Seitenwandsegmente mit dem Höhenwandsegment zu der Breite des Höhenwandsegmentes 10 zusammenklappbar sind. Das hat den Vorteil, dass nach Einführen der zusammengeklappten Trennwand 4 wie sie Figur 7c zeigt in die Kläranlage, wie sie in den vorhergehenden Figuren 1 bis 5 gezeigt wird, die Trennwand 4 lediglich aufzuklappen ist, ohne dass weitere Drehungen oder Manipulationen erforderlich werden. Beim Aufklappen entsteht automatisch die Durchlassöffnung 6 im unteren Bereich der Trennwand 4, während sich das erste und das zweite Seitenwandsegment 8 bzw. 9 an die in den Figuren 2 und 3 gezeigten inneren Seitenwände 16 und 17 der Kläranlage 4' anlegen bzw. an den Widerlagern 18 fixiert oder wie in Figur 4 in die dort gezeigten Nuten 19 und 21 eingeführt werden können. Abschließend kann die Trennwand 4 durch eine Profilleiste, auf einer Oberkante 41 der Trennwand 4 wie es Figur 2 zeigt ausgerichtet und stabilisiert werden.

Figur 7b zeigt einen Querschnitt durch die Trennwand 4' entlang der Schnittebene B-B in Figur 7a. Dieser Querschnitt verdeutlicht die Positionen der Scharnierelemente 25 zwischen dem Höhenwandteil 10 und den Seitenwandteilen 8 und 9.

In Figur 7c wird die in Figur 7a gezeigte Trennwand 4' im zusammengeklappten Zustand 26 gezeigt. Da die Breite der Seitenwandsegmente 8 und 9 zusammen nicht größer ist als die Breite b der Öffnung 6 in der weiteren Ausführungsform der Trennwand 4' ist, kann die Trennwand 4', wie es Figur 7d zeigt, zusammengeklappt werden, wobei beide Seitenwandteile 8 und 9 auf einer Seite des Höhenwandteils aufliegen. Der zugehörige Querschnitt durch die Trennwand 4' entlang der Schnittebene B-B wird in Figur 7d gezeigt und verdeutlicht, dass die Breite b der zusammengeklappten Trennwand 4' der Breite des Höhenwandteils 10 entspricht.

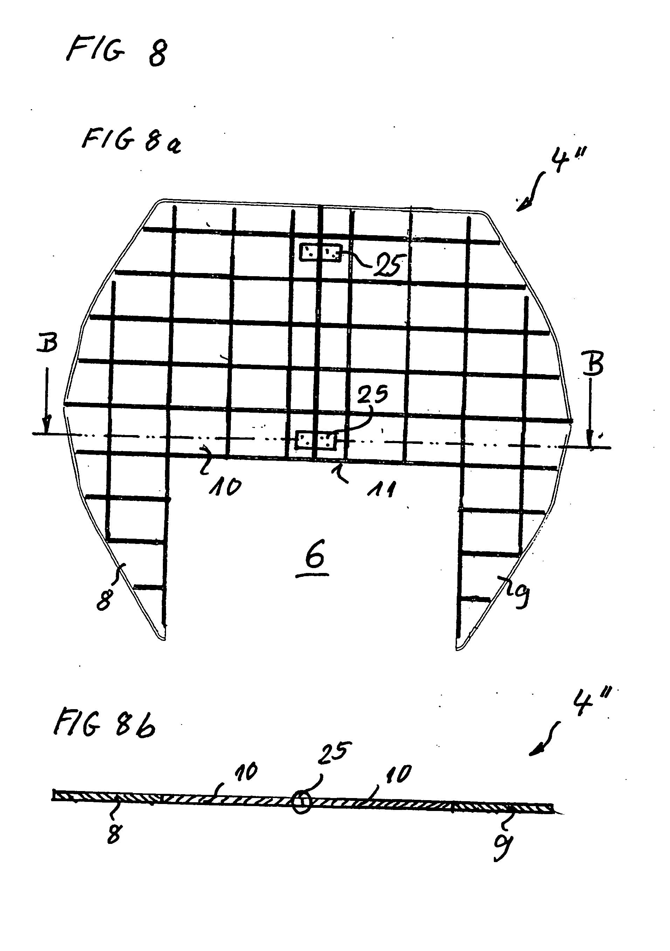

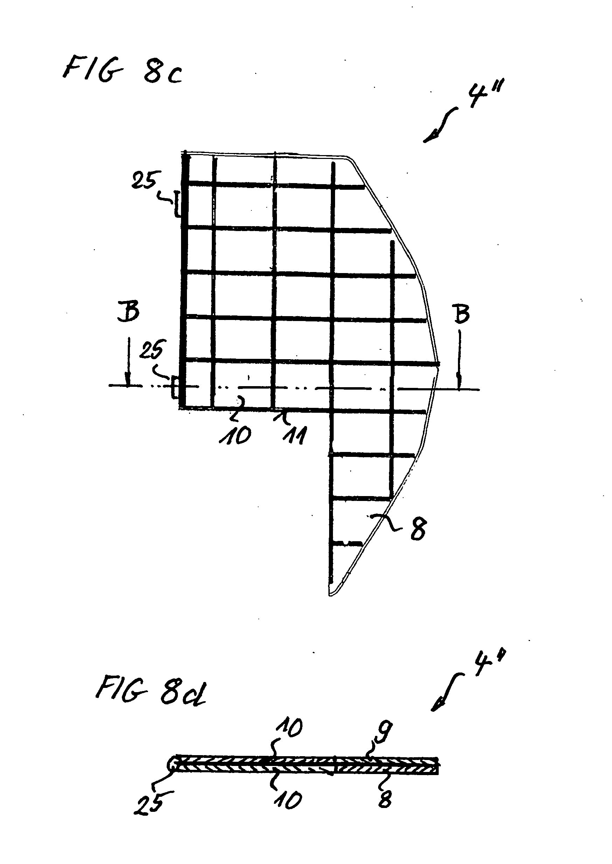

Figur 8 zeigt mit den Figuren 8a, 8b, 8c und 8d Ansichten einer weiteren modifizierten Ausführungsform der Trennwand 4" mit Schamierelementen 25. In diesem Fall ist das Höhenwandsegment 10 in zwei symmetrische Hälften halbiert, zwischen denen in vertikaler Ausrichtung die Scharnierelemente 25 angeordnet sind. Die beiden Seitenwandsegmente 8 und 9 sind starr mit den Hälften des Höhenwandsegments 10 verbunden, wie es im Querschnitt entlang der Schnittlinie B-B der Figur 8a in der Figur 8b gezeigt wird.

In Figur 8c wird wiederum die zusammengeklappte Version dieser weiteren Ausführungsform der Trennwand 4" gezeigt und in Figur 8d ein Querschnitt durch die zusammengeklappte Version entlang der Schnittlinie B-B der Figur 8c.

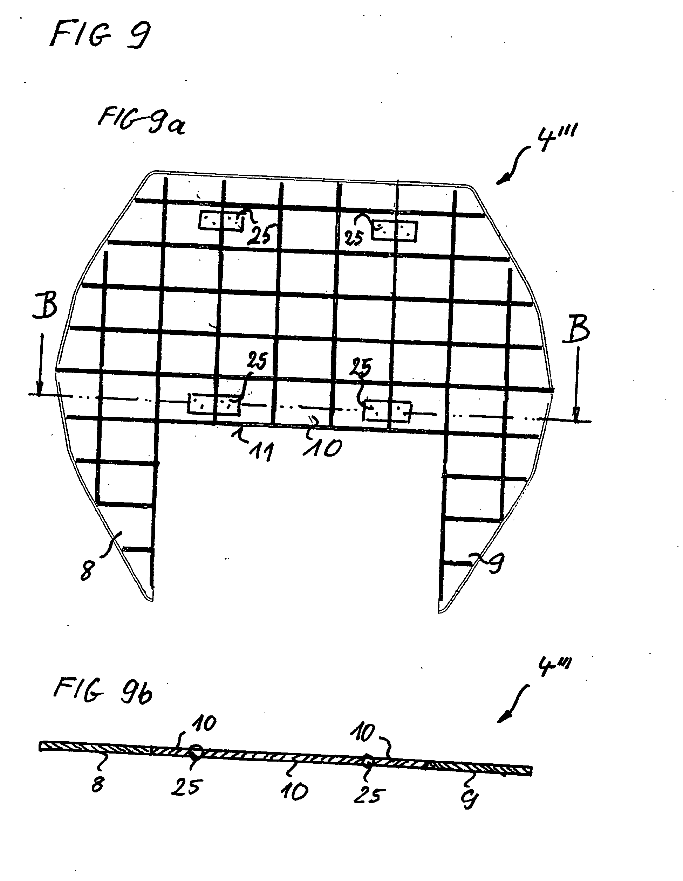

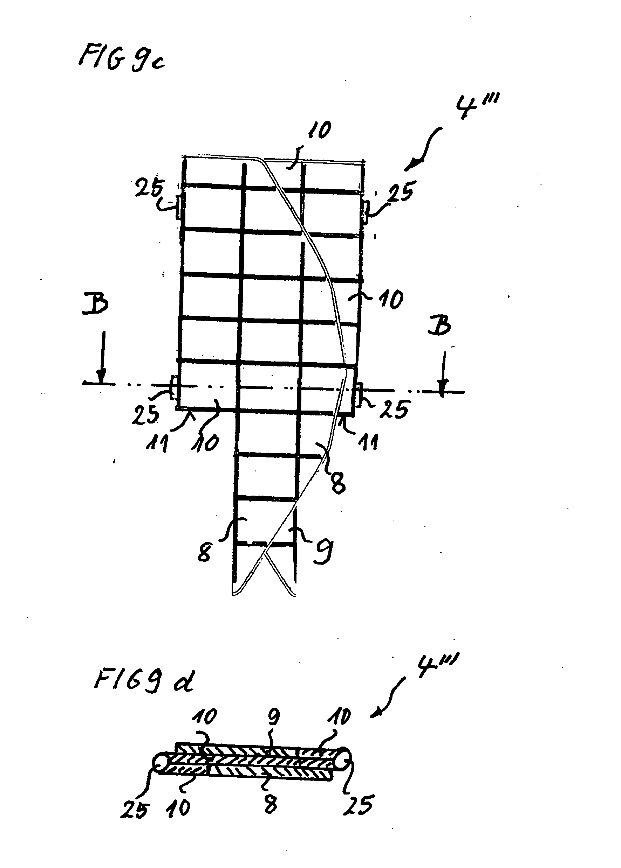

Figur 9 zeigt mit den Figuren 9a, 9b, 9c und 9d Ansichten einer anderen modifizierten Trennwand 4'" mit Schamierelementen 25, welche die Trennwand 4'" in drei etwa gleichbreite Teile aufteilt, wie es die Figur 9b zeigt, wobei die drei etwa gleichbreiten Teile der Trennwand 4"' durch eine relativ enge zentrale Öffnung einer Kläranlage eingeführt werden können. Dieses wird deutlicher mit der Darstellung der zusammengefalteten Trennwand 4" in Figur 9c. Ein Zusammenfalten ist erforderlich, da ein einfaches aufeinander Klappen der drei Teile der Trennwand 4"' nur mit speziellen Schamierelementen möglich wäre. Dieses Zusammenfalten wird in Figur 9d mit einer Darstellung der Trennwand 4'" im Querschnitt entlang der Schnittlinie B-B der Figur 9c gezeigt.

### Bezugszeichenliste

- 1: Kläranlage
- 1': Kläranlage
- 1": Kläranlage
- 2: Vorklärbecken
- 3: Reaktorbecken
- 4: Trennwand
- 4': Trennwand
- 4": Trennwand
- 4"': Trennwand
- 5: Belebtschlamm- und Feststoffbereich
- 6: Öffnung
- 7: Gehäuse
- 8: Seitenwandsegment
- 9: Seitenwandsegment
- 10: Höhenwandsegment
- 11: Unterkante
- 12: Ansaugöffnung
- 13: Wasserhebevorrichtung
- 14: Bodenbereich
- 15: Belüftungseinheit
- 16: Seitenwand
- 17: Seitenwand
- 18: Widerlager
- 19: Nut
- 20: Boden
- 21: Nut
- 22: Führungsschiene
- 23: Führungsschiene
- 24: Schlammgitter
- 25: Scharnierelement
- 26: zusammengeklappter Zustand
- 27: zentrale Öffnung
- 28: Abwasserzuflussrohr
- 29: Seitenwandkante
- 30: Grenzschichtniveau
- 31: Ansaugstutzen
- 32: geklärtes Wasser
- 33: Wasserstandsniveau
- 34: Auslass
- 35: Klarwasserbereich
- 36: Vorfluter
- 37: Abgasauslass
- 38: Druckluftzufuhr
- 39: Deckel
- 40: Füllstandsniveau
- 41: Oberkante
- 42: Schwenkachse
- 44: Innenkante
- 45: Innenkante
- 46: oberer Bereich
- 47: unterer Bereich

- b: Breite
- h: Höhe

## Patentansprüche

1. Kläranlage aufweisend:
ein Vorklärbecken (2);
ein Reaktorbecken (3); und
eine Trennwand (4), die das Vorklärbecken (2) von dem Reaktorbecken (3) abteilt,
wobei das Vorklärbecken (2) mit dem Reaktorbecken (3) strömungstechnisch in Wirkverbindung steht
**dadurch gekennzeichnet, dass**
die Trennwand (4) in einem Belebtschlamm- und Feststoffbereich (5) der Kläranlage (1) mindestens eine Öffnung (6) aufweist, welche die strömungstechnische Wirkverbindung zwischen dem in ein Gehäuse (7) der Kläranlage (1) integrierten Vorklärbecken (2) und dem Reaktorbecken (3) bildet.

2. Kläranlage nach Anspruch 1, **dadurch gekennzeichnet, dass** die Öffnung (6) in der Trennwand (4) durch Seitenwandsegmente (8, 9) auf eine Breite (b) und mindestens einem Höhenwandsegment (10) auf eine Höhe (h) begrenzt ist.

3. Kläranlage nach Anspruch 2, **dadurch gekennzeichnet, dass** das mindestens eine Höhenwandsegment (10) eine Unterkante (11) aufweist, welche die Oberkante der Öffnung (6) in der Trennwand (4) bildet, und wobei die Unterkante (11) des mindestens einen Höhenwandsegmentes (10) unterhalb eines Niveaus einer Ansaugöffnung (12) einer Wasserhebevorrichtung (13) in dem Reaktorbecken (4) angeordnet ist.

4. Kläranlage nach Anspruch 3, **dadurch gekennzeichnet, dass** in einem Bodenbereich (14) der Öffnung (6) eine Belüftungseinheit (15) angeordnet ist.

5. Kläranlage nach einem der vorhergehenden Ansprüche, **dadurch gekennzeichnet, dass** innere Seitenwände (16, 17) des Gehäuses (7) der Kläranlage (1) Widerlager (18) zur Aufnahme und Fixierung der Seitenwandsegmente (8, 9) der Trennwand (4) aufweisen.

6. Kläranlage nach Anspruch 5, **dadurch gekennzeichnet, dass** in den inneren Seitenwänden (16, 17) des Gehäuses (7) Nuten (19, 21) vorgesehen sind, die zur Aufnahme und Fixierung der Seitenwandsegmente (8, 9) der Trennwand (6) geeignet sind.

7. Trennwand einer Kläranlage (1) zum Trennen eines Vorklärbecken (2) von einem Reaktorbecken (3) aufweisend:
ein Höhenwandteil, das in einem oberen Bereich der Kläranlage (1) angeordnet ist und eine Unterkante (11) aufweist, die in einen Klärschlammbereich (5) eines Reaktorbeckens (3) hineinragt, wobei das Höhenwandteil geeignet ist, einen Zustrom von vorgeklärtem Abwasser von Betriebsphasen innerhalb des Reaktorbeckens (3) zu trennen,
**dadurch gekennzeichnet, dass**
die Trennwand (4) zusätzlich ein erstes Seitenwandsegment (8) und ein zweites Seitenwandsegment (9) ausweist, die sich bis zu einem Boden (20) der Kläranlage (1) erstrecken, und wobei ein Höhenwandsegment (10) zwischen den Seitenwandsegmenten (8, 9) derart angeordnet ist, dass die Trennwand (4) ein in die Kläranlage (1) integriertes Vorklärbecken (2) bildet, das von einem Reaktorbecken (3) durch die Trennwand (4) abgeteilt ist.

8. Trennwand nach Anspruch 7, **dadurch gekennzeichnet, dass** die Seitenwandsegmente (8, 9) und das Höhenwandsegment (10) eine Öffnung (6) in der Trennwand (4) freigeben, wobei die Öffnung (6) in der Trennwand (4) eine strömungstechnische Wirkverbindung zwischen dem in die Kläranlage (1) integrierten Vorklärbecken (2) und dem durch die Trennwand (4) räumlich begrenzten Reaktorbecken (3) ausbildet.

9. Trennwand nach Anspruch 7 oder Anspruch 8, **dadurch gekennzeichnet, dass** die Seitenwandsegmente (8, 9) der Trennwand (4) im Bereich der Öffnung (6) Führungsschienen (22, 23) aufweisen, die geeignet sind, Schlammrechen und/oder Schlammgitter (24) aufzunehmen.

10. Trennwand nach einem der Ansprüche 7 bis 9, **dadurch gekennzeichnet, dass** die Seitenwandsegmente (8, 9) mit dem Höhenwandsegment (10) über Scharnierelemente (25) mechanisch verbunden sind, und wobei die Seitenwandsegmente (8, 9) mit dem Höhenwandsegment (10) in einem zusammengeklappten Zustand (26) über eine zentrale obere Öffnung (27) eines Gehäuses (7) der Kläranlage (1) in die Kläranlage (1) einführbar und in einem aufgeklappten Zustand zur Ausbildung des integrierten Vorklärbeckens (2) in dem Gehäuse (7) montierbar sind.
